# EUROPEAN PATENT APPLICATION

(11) **EP 3 608 596 A1**
(43) Date of publication of application: **12.02.2020**
(21) Application number: 18188189.7
(22) Date of filing: 09.08.2018
(51) Int. Cl.: F24D 3/08, F24D 10/00, F24D 17/02

(54) **LOAL HEAT EXTRACTING ASSEMBLY HAVING PASSIVE AND ACTIVE ELEMENTS AND A LOCAL ENERGY DISTRIBUTING SYSTEM COMPRISING A PLURALITY OF SUCH LOCAL HEAT EXTRACTING ASSEMBLIES**

(71) Applicant: E.ON Sverige AB, 205 09 Malmö (SE)
(72) Inventor: Rosén, Per, 227 33 Lund (SE); Skogström, Jacob, 234 42 Lomma (SE); Rosenqvist, Fredrik, 254 51 Helsingborg (SE); Lindoff, Bengt, 237 35 Bjärred (SE)
(74) Representative: AWA Sweden AB

(57) **Abstract**

A local heat extracting assembly (200) is disclosed. The local heat extracting assembly (200) having one inlet (201) connectable to a local feed conduit (22) of a local energy distributing system (20), and one outlet (205) connectable to a local return conduit (23) of the local energy distributing system (20). The local heat extracting assembly (200) comprises: a local heat exchanger (220) configured to extract heat from local heat transfer fluid of the local feed conduit (22) to a heating liquid of a heating circuit (230) configured to circulate the heating liquid in a building (40) for providing comfort heating; and a heat pump (210) configured to pump heat from the heating liquid of the heating circuit (230) or from local heat transfer fluid of the local feed conduit (22) to provide hot tap water to the building (40). A local energy distributing system (20) comprising a plurality of local heat extracting assembly (200) is further disclosed. Further, a method for extracting heat from the local energy distributing system (20) and a method for distributing energy to a plurality of buildings (40) are disclosed.

## Description

### Field of the invention

A local heat extracting assembly and a local energy distributing system comprising a plurality of local heat extracting assemblies are presented. Also a method for extracting heat from the local energy distributing system and a method for distributing energy to a plurality of buildings are presented.

### Background of the invention

Nearly all large developed cities in the world have at least two types of energy distribution grids incorporated in their infrastructures: one grid for providing heating and one grid for providing cooling. The grid for providing heating may e.g. be used for providing comfort and/or process heating, and/or hot tap water preparation. The grid for providing cooling may e.g. be used for providing comfort cooling and/or process cooling.

A common grid for providing heating is a gas grid or an electrical grid providing comfort and/or process heating, and/or hot tap water preparation. An alternative grid for providing heating is a district heating grid. The district heating grid is used for providing heated heat transfer fluid, typically in the form of water, to buildings of the city. A centrally placed heating and pumping plant is used for heating and distributing the heated heat transfer fluid. The heated heat transfer fluid is delivered to the buildings via one or more feed conduits and is returned to the heating and pumping plant via one or more return conduits. Locally at a building, heat from the heated heat transfer fluid is extracted via a district heating substation comprising a heat exchanger.

A common grid for providing cooling is the electrical grid. The electricity may e.g. be used for running refrigerators or freezers or for running air conditioners for providing comfort cooling. An alternative grid for providing cooling is a district cooling grid. The district cooling grid is used for providing cooled heat transfer fluid, typically in the form of water, to buildings of the city. A centrally placed cooling and pumping plant is used for cooling and distributing the thus cooled heat transfer fluid. The cooled heat transfer fluid is delivered to the buildings via one or more feed conduits and is returned to the cooling and pumping plant via one or more return conduits. Locally at a building, cold from the cooled heat transfer fluid is extracted via a heat pump.

The use of energy for heating and/or cooling is steadily increasing, influencing the environment negatively. By improving utilization of the energy distributed in the energy distribution grids, negative influences on the environment may be reduced. Hence, there is a need for improving utilization of the energy distributed in energy distribution grids, including existing grids. Provision of heating/cooling also requires huge investments when it comes to engineering projects and there is a constant strive to cut the costs. Hence, there is a need for improvements in how to provide sustainable solutions to heating and cooling of a city.

### Summary of the invention

It is an object of the present invention to solve at least some of the problems mentioned above.

According to a first aspect a local energy distributing system is provided. The local energy distributing system comprising: a local feed conduit; a local return conduit; a central heat exchanger connectable to a district heating grid having a district feed conduit for an incoming flow of district heat transfer fluid having a first temperature in the range of 50-200°C, preferably 80-120°C, and a district return conduit for a return flow of district heat transfer fluid, wherein the central heat exchanger is configured to exchange heat from the incoming flow of district heat transfer fluid to an outgoing flow of local heat transfer fluid in the local feed conduit, the outgoing flow of local heat transfer fluid having a temperature of 25-45°C; and a plurality of local heat extracting assembly, each having one inlet connected to the local feed conduit and one outlet connected to the local return conduit. Each local heat extracting assembly comprises: a local heat exchanger configured to extract heat from local heat transfer fluid of the local feed conduit to a heating liquid of a heating circuit configured to circulate the heating liquid in a building for providing comfort heating; and a heat pump configured to pump heat from the heating liquid of the heating circuit or from local heat transfer fluid of the local feed conduit to provide hot tap water to the building.

The present system is mapping well into the present development of the property-related hydraulic infrastructures for the distribution of comfort heating wherein comfort heating needs are being fulfilled using a lower supply temperature than historically, in the range of range of 25-45° C as to be compared with previous infrastructures which were designed for supply temperatures of 60°C or more. Although a lower supply temperature than historically is used the same comfort heat demand is satisfied. This may be achieved by utilizing larger radiator surfaces or by installing a floor heating system, sometimes supplemented by heating of the ventilation air, which is also done with surface enlargement for more efficient heat transfer between supply air and the real estate distribution system. Consequently, the temperature requirements to satisfy a certain indoor temperature comfort decrease. It may hence be possible to achieve full indoor temperature comfort - say 20-25°C - with supply temperatures in the range of 25-45°C.

By exchanging heat from the incoming flow of district heat transfer fluid to the outgoing flow of local heat transfer fluid in accordance with the above, a cheaper, less advanced and more energy efficient energy distribution as compared with a traditional district heating system utilizing the district heating grid may be achieved. For example, heat transfer losses will be reduced making the local energy distributing system more economical and energy efficient. Moreover, since heat transfer losses will be reduced, due to the relatively low temperature of the local heat transfer fluid distributing the energy in the local energy distribution system, constraints on the use of piping's for the conduits transporting the local heat transfer fluid is reduced as compared with a traditional district heating system utilizing the district heating grid. Moreover, by setting the from the central heat exchanger outgoing flow of local heat transfer fluid at the temperature of 25-45°C the cooling rate in the local energy distribution system will be reduced as compared with a traditional district heating system utilizing a district heating grid. However, the outgoing flow of local heat transfer fluid may still be used for comfort heating using passive technology, i.e. local heat exchangers. The local energy distributing system also makes it possible to implement efficient energy distribution solutions in expansion areas where existing district heating grids are weak or difficult to expand. Strengthen or expanding existing district heating grids is both expensive and complicated. Moreover, by reducing the cooling rate of the energy distribution system the flow rate of the heat transfer fluid is reduced. Hence, the overall demand on the pumping in the energy distribution system is reduced. This will further reduce the complexity of the energy distribution system as compared with a traditional district heating system utilizing a district heating grid. Further, the disclosed local energy distributing system may be much safer than a traditional district heating grids since a lower temperature of the heat transfer fluid than in the traditional district heating grids is used.

Further by the present system it may be possible to use passive technology - local heat exchangers - instead of using active unit - local heat pumps - to meet the comfort heating requirements. Further, the temperature range of the local energy distributing system is in the order that cooling machines may work against the same local energy distributing system. As mentioned above, the local energy distributing system may be connected to an existing district heating grid. The district heating grid may the act as a heat supply grid for the local energy distributing system. Hot tap water needs may be satisfied via an active unit, the heat pump. Using accumulating preparation of hot tap water, the active unit, i.e. the heat pump, may be a relatively low powered heat pump. The present combination of active and passive technology may provide for savings in supply of electricity in the buildings wherein the local heat extracting assemblies are installed. This since the local heat extracting assemblies at least in part may be made passive. Further, reduction in complexity of local heat extracting assemblies may be provided since part of the assemblies may be made passive. Moreover, space requirements of the installation of a local heat extracting assembly may be less.

The local heat exchanger may comprise a first side and a second side. An inlet of the first side of the local heat exchanger may form the one inlet of a respective local heat extracting assembly. An outlet of the first side of the local heat exchanger may forms the one outlet of the respective local heat extracting assembly. An outlet of the second side of the local heat exchanger may be connected to a feed of the heating circuit and to an inlet of a first side the local heat pump. An inlet of the second side of the local heat exchanger may be connected to a return of the heating circuit and to an outlet of the first side of the local heat pump. By this a more compact local heat extracting assembly may be provided. The local heat extracting assembly may also be made less complicated since less piping and less parts of the local heat extracting assembly is needed. This since the local heat pump is connected to the "backside", the second side, of the local heat exchanger.

The outlet of the first side of the local heat pump may be connected to the inlet of the second side of the heat exchanger by being connected to the return of the heating circuit at a connection point.

Further, a heating circuit circulation pump may be arranged in the heating circuit. The heating circuit circulation pump may be arranged in the return of the heating circuit. The heating circuit circulation pump may be arranged between the connection point, at which the outlet of the first side of the local heat pump is connected to the return of the heating circuit, and the inlet of the second side of the heat exchanger. The heating circuit circulation pump may be configured to pump heating liquid both in the heating circuit and in the first side of the local heat pump.

The local energy distributing system may further comprise one or more local cold extracting assemblies, wherein each local cold extracting assembly comprises a cooling machine configured to pump heat from a cooling circuit, configured to circulate a cooling liquid in the building, to the local energy distributing system. Hence, the local energy distributing system may be used both for distributing heat and cold to building. A diverse and space saving local energy distributing system may hence be provided.

According to a second aspect a local heat extracting assembly is provided. The local heat extracting assembly having one inlet connectable to a local feed conduit of the local energy distributing system, and one outlet connectable to a local return conduit of the local energy distributing system. The local heat extracting assembly comprising: a local heat exchanger configured to extract heat from local heat transfer fluid of the local feed conduit to a heating liquid of a heating circuit configured to circulate the heating liquid in a building for providing comfort heating; and a heat pump configured to pump heat from the heating liquid of the heating circuit or from local heat transfer fluid of the local feed conduit to provide hot tap water to the building.

The above mentioned features of the local energy distribution system, when applicable, apply to this second aspect as well. In order to avoid undue repetition, reference is made to the above.

According to a third aspect a method for extracting heat from the local energy distributing system is provided. The method comprising: exchanging, at a local heat exchanger, heat from local heat transfer fluid of the local energy distributing system to heating liquid of the heating circuit configured to circulate the heating liquid in a building; and pumping, at the local heat pump, heat from heating liquid of the heating circuit to produce hot tap water to the building.

Heat may be extracted from a flow of local heat transfer fluid having a temperature of 25-45°C. The Heat may be extracted such that the heating liquid of the heating circuit is gaining a temperature of 25-45°C.

Heat may be pumped from a flow of heating liquid having a temperature of 25-45°C to a temperature equal to or greater than 60°C.

The method according to the third aspect may further comprise circulating heating liquid in the heating circuit and in an evaporator of the heat pump using a common circulation pump.

The above mentioned features of the local energy distribution system and the local heat extracting assembly, when applicable, apply to this third aspect as well. In order to avoid undue repetition, reference is made to the above.

According to a fourth aspect a method for distributing energy to a plurality of buildings is provided. The method comprising: exchanging, at a central heat exchanger, heat from an incoming flow of district heat transfer fluid of a district feed conduit in a district heating grid, the incoming flow of district heat transfer fluid having a first temperature in the range of 50-200°C, preferably 80-120°C, to an outgoing flow of local heat transfer fluid in a local feed conduit of a local energy distributing system such that the outgoing flow of local heat transfer fluid having a temperature of 25-45°C; and extracting, at a local heat extracting assembly in each of the plurality of buildings, each local heat extracting assembly having one inlet connected to the local feed conduit, heat from the local heat transfer fluid flowing in the local feed conduit for providing comfort heating and hot tap water to the respective building. The act of extracting heat from the local heat transfer fluid flowing in the local feed conduit for providing comfort heating and hot tap water to the respective building comprises: exchanging, at a local heat exchanger, heat from local heart transfer fluid of the local energy distributing system to heating liquid of the heating circuit, the heating circuit being configured to circulate the heating liquid in the respective building for providing comfort heating to the building; and pumping, at a local heat pump, heat from heating liquid of the heating circuit to produce hot tap water to the building.

The above mentioned features of the local energy distribution system and the local heat extracting assembly, when applicable, apply to this fourth aspect as well. In order to avoid undue repetition, reference is made to the above.

Above different parts of the systems/assemblies have been referred to as being active or passive. With passive is meant heat exchange between different hydraulic circuits. With active is meant an added ability to alter fluid temperatures beyond what just a heat exchanger can achieve. Typically the fluid temperature is altered by pumping heat between different hydraulic circuits.

In case of using passive elements there is always a "temperature depletion" over the heat exchanger. When distributing heat, the temperature after the heat exchanger will always be slightly lower than before. That is, the maximum temperature requirements at the point of taking out heat must always be slightly lower than the temperature of the heat transfer fluid in the distribution network. When distributing cold, the temperature after the heat exchanger will always be slightly higher. That is, the minimum temperature requirement at the point of taking out cold must be slightly higher than the temperature of the heat transfer fluid in the distribution network. The passive solution requires that the cooling of the heat transfer fluid of the distribution network, in case of heat outtake, and the heating of the heat transfer fluid of the distribution network, in case of cold outtake, can be done to a reasonable extent. Otherwise the possibility of hydraulically distributing the heat or cold will not be present.

When using active elements as in the present invention heat pumping is decentralized to the different point of heat or cold outtake. Doing so, it is possible to satisfy local thermal needs without having to distribute sufficiently warm heat transfer fluid for the need, in case of a heating need, or to distribute sufficiently cold heat transfer fluid for the need, in case of a cooling need, which is the case if only passive elements are to be used. This creates totally different degrees of freedom than the rather strict thermal frames that apply on today's district heating and cooling systems where only passive elements are used.

Hence, the present invention provides the possibility to satisfy more than one requirement regarding temperature at the point of e.g. taking out heat. For example, comfort heating and tap hot water where one of the temperature needs is at a different temperature level than the other need. For example, tap water requirements are at a level of about 55-60°C while by using new modern radiator systems and ventilation systems heating needs may be satisfied with temperatures between 25-40°C. By adding on an active unit, the distribution network may be configured so that only one of the needs can be satisfied with the passive element and then an active element is used for the other need.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic diagram of an energy distribution system.
Fig. 2 is a schematic diagram of a local heat extracting assembly according to an exemplifying embodiment.
Fig. 3 is a schematic diagram of a local heat extracting assembly according to another exemplifying embodiment.
Fig. 4 is a block diagram of a method for extracting heat from a local energy distributing system.
Fig. 5 is a block diagram of a method for distributing energy to a plurality of buildings.
Fig. 6 is a schematic diagram of a local cold extracting assembly.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

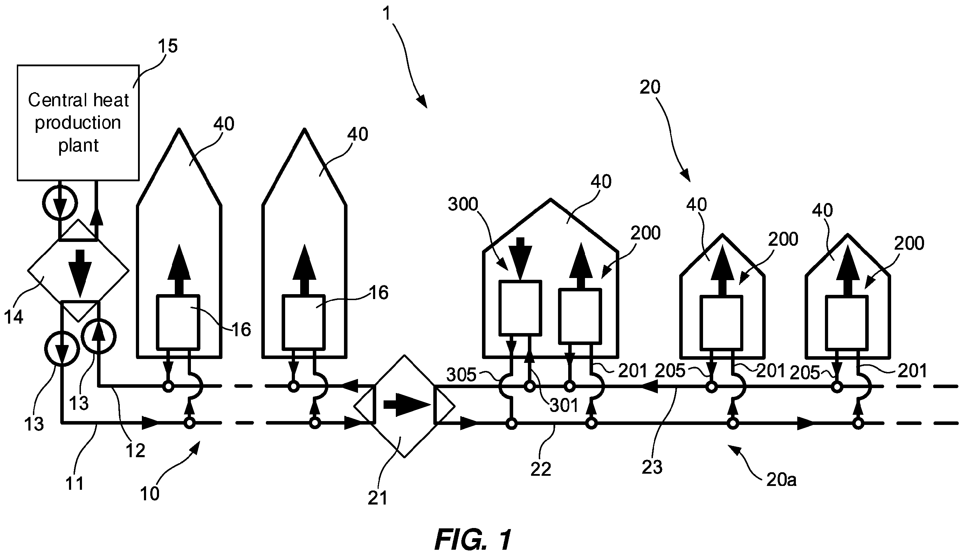

In connection with Fig. 1 an energy distribution system 1 will be discussed. The energy distribution system 1 comprises a district heating grid 10 and a local energy distributing system 20. The local energy distributing system 20 is connected to the district heating grid 10 via a central heat exchanger 21.

The district heating grid 10 is formed by one or several hydraulic networks configured to deliver district heat transfer fluid to district heating substations 16 which are arranged in buildings 40 such as office buildings, business premises, residential homes and factories in need for heating. A typically district heating substation 16 comprises a heat exchanger. A typical district heating grid 10 comprises a central heat production plant 15 which heats the district heat transfer fluid. The central heat production plant 15 may by way of example be a district heating plant. The heated district heat transfer fluid is transported via one or more district feed conduits 11 forming part of a conduit network to distributed district heating substations 16 which are arranged in the buildings 40. It goes without saying that one and the same building 40 may comprise several district heating substations 16. The district heating substations 16 are configured to provide comfort heating and/or hot tap water to the respective building 40.

When the heat of the district heat transfer fluid is consumed in the district heating substations 16 the temperature of the district heat transfer fluid is lowered and the thus cooled district heat transfer fluid is returned to the central heat production plant 15 via one or more district return conduits 12 forming part of the conduit network.

District heating grids 1 are used to satisfy comfort heating demands and/or hot tap water demands. The district heat transfer fluid is typically water. The temperature of the district heat transfer fluid in the one or more district feed conduits 11 is typically between 50-200°C, preferably 80-120°C. The return temperature in the one or more district return conduits 12 is typically between 40-60°C.

The driving pressure difference between district feed conduits 11 and district return conduits 12 of the hydraulic network always creates a so called "pressure cone" whereby the pressure in the district feed conduits 11 is higher than the pressure in the return conduits 12. This pressure difference circulates the district heat transfer fluid in the hydraulic network between the central heat production plant 15 and the district heating substations 16. One or more district grid circulation pumps 13 are arranged in the district heating grid 10 in order to provide the driving pressure difference.

The district feed conduits 11 and the return conduits 12 used in the district heating grid 10 are typically made of insulated steel pipes designed for a maximum pressure of 1,6 MPa and maximum temperature of about 200°C. In this context insulated shall be construed such that the pipes have an extra layer of heat insulating material wrapped around the same.

As indicated above, the local energy distributing system 20 is connected to the district heating grid 10 via the central heat exchanger 21. Heat exchangers as such are well known in the art and can basically be described as comprising an arrangement of a first circuit circulating a first fluid having a first temperature, and a second circuit circulating a second fluid having a second temperature. The first and second circuits closely abutting each other along a respective extension thereof. By the two circuits along an extension closely abutting each other a heat transfer takes place between the first and second fluids. For the central heat exchanger 21 the first circuit forms part of the district heating grid 10 and the second circuit forms part of a local energy distributing grid 20a. The local energy distributing grid 20a being part of the local energy distributing system 20. The local energy distributing grid 20a comprising a local feed conduit 22 and a local return conduit 23. The local energy distributing grid 20a is configured to deliver local heat transfer fluid to local heat extracting assemblies 200 which are arranged in buildings 40, preferably residential homes but also other types of buildings 40 such as office buildings, business premises and factories in need for heating, such as comfort heating and/or hot tap water production.

The piping used for the local feed and return conduits 22, 23 in the local energy distributing system 20 is normally plastic un-insulated piping. In this context un-insulated shall be construed such that the piping does not have an extra layer of heat insulating material wrapped around the same. The piping is typically designed for a maximum pressure of 0.6-1MPa. The piping is further typically designed for maximum temperature of about 50°C.

The local heat transfer fluid, and hence energy carrier, of the local energy distributing grid 20a is typically water, although it is to be understood that other fluids or mixture of fluids may be used. Some non-limiting examples are ammonia, anti-freezing liquids (such as glycol), oils and alcohols. A non-limiting example of a mixture is water with an anti-freezing agent, such as glycol, added thereto.

The central heat exchanger 21 is configured to exchange heat from an, via the district feed circuit 11, incoming flow of district heat transfer fluid to an outgoing flow of local heat transfer fluid in the local feed conduit 22. The central heat exchanger 21 is configured to exchange heat such that the outgoing flow of local heat transfer fluid has a temperature of 25-45°C. Further, the central heat exchanger 21 may be configured to exchange heat such that the district heat transfer fluid returned to the return conduit is having a temperature of 15-30°C. By returning district heat transfer fluid of this low temperature the cooling performed in the central heat exchanger 21 can be as great as approximately 100°C (depending of the temperature of the incoming district heat transfer fluid feed through the district feed conduit). This high degree of cooling performed in the central heat exchanger will reduce the heat losses in the district heating grid. Moreover, it will reduce the degree of pumping needed in the district heating grid.

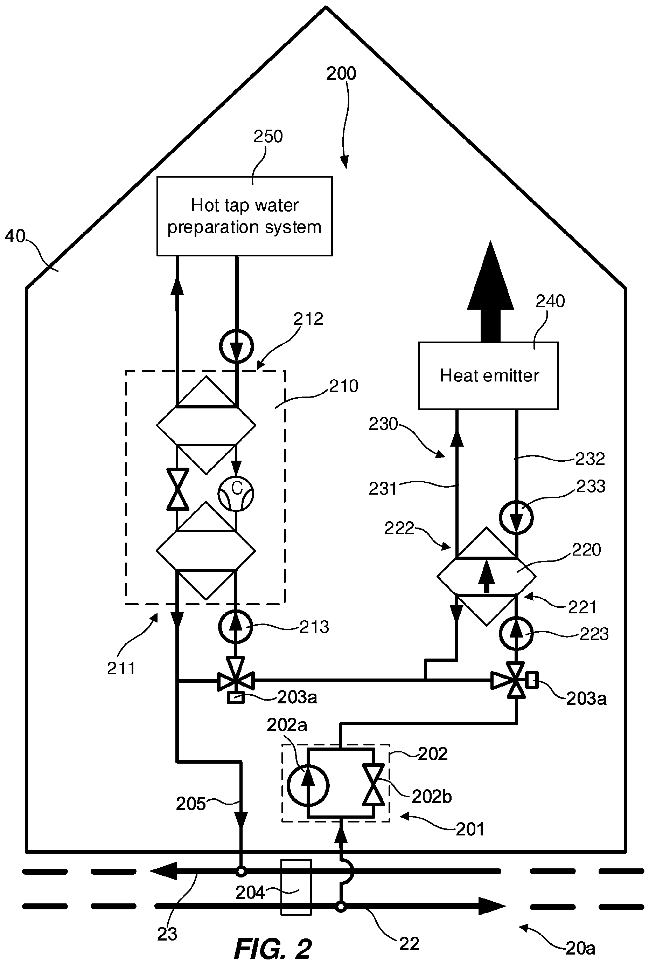

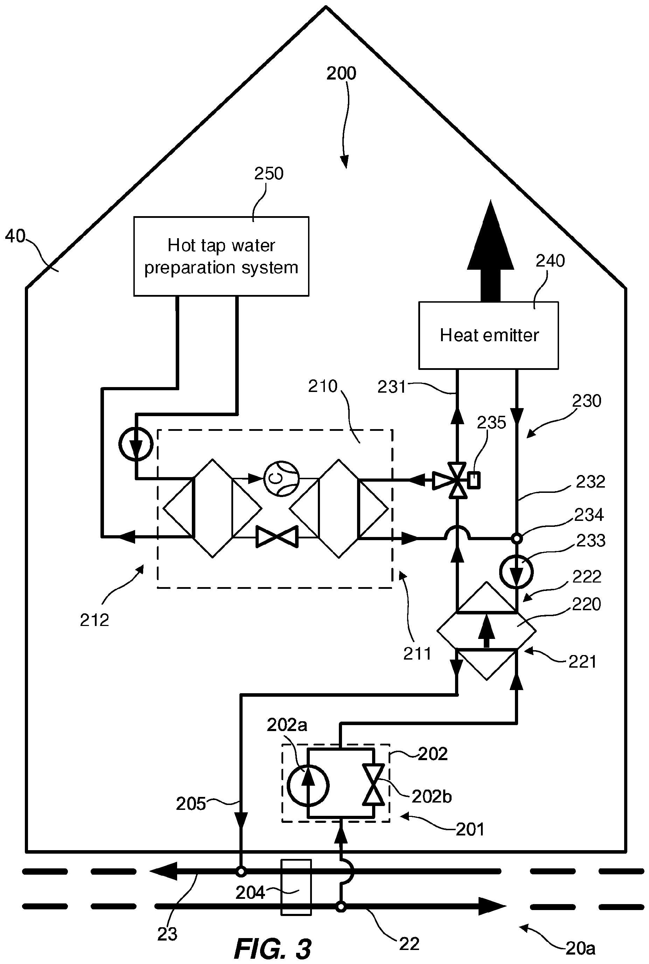

Hence, the local energy distributing system 20 comprises a plurality of local heat extracting assemblies 200. With reference to Figs 2 and 3 embodiments of local heat extracting assemblies 200 will be discussed in more detail. Below, first common features of the embodiments of local heat extracting assemblies 200 of Figs 2 and 3 will be discussed and thereafter specific features of the different embodiments will be discussed.

A local heat extracting assembly 200 comprises a local heat pump 210 and a local heat exchanger 220.

The local heat exchanger 220 is configured to provide heat to a heating liquid of a heating circuit 230. Heat exchangers as such are well known in the art and can basically be described as comprising an arrangement of a first circuit circulating a first fluid having a first temperature, and a second circuit circulating a second fluid having a second temperature. The first and second circuits closely abutting each other along a respective extension thereof. By the two circuits along an extension closely abutting each other a heat transfer takes place between the first and second fluids. In other words, a heat transfer takes place between a first side 221 of the local heat exchanger 220 and a second side 222 of the local heat exchanger 220. In Figs 2 and 3 the heat transfer between the first and second sides 221, 222 is indicated by an arrow indicating the direction of the heat transfer. For the local heat exchanger 220 the first circuit (or the first side 221) forms part of the local energy distributing grid 20a and the second circuit (or the second side 222) forms part of the heating circuit 230. The first and second circuits are different circuits. An outlet of the second side 222 of the local heat exchanger 210 is connected to a feed 231 of the heating circuit 230. An inlet of the second side 222 of the local heat exchanger 220 is connected to a return 232 of the heating circuit 230.

The heating circuit 230 is forming part of the local heat extracting assembly 200. The heating circuit 230 is configured to circulate a heating liquid in a building 40 in order to provide comfort heating to the building 40. The heating liquid of the heating circuit 230 is typically water, although it is to be understood that other liquids or mixture of liquids may be used. Some non-limiting examples are ammonia, anti-freezing liquids (such as glycol), oils and alcohols. A non-limiting example of a mixture is water with an anti-freezing agent, such as glycol, added thereto. The heating circuit 230 may further comprise one or more heat emitters 240. Examples of heat emitters 240 are floor heating systems and wall mounted heat radiators. The heating liquid of the heating circuit 230 may be circulated using a heating circuit circulation pump 233.

The local heat exchanger 220 is configured to exchange heat from the incoming local heat transfer fluid of the local energy distributing grid 20a such that the from the heat exchanger 220 outgoing flow of heating liquid of the heating circuit 230 has a temperature of 25-45°C.

The one or more heat emitters 230 are configured to emit heat such that the to the heat exchanger 220 incoming flow of heating liquid of the heating circuit 230 has a temperature of 20-40°C.

The local heat pump 210 is configured to provide hot tap water to the building 40. Heat pumps as such, are well known in the art and basically comprise a closed circuit in which brine is circulated between first heat exchanger at a first side 211 of the local heat pump 210 and a second heat exchanger at a second side 212 of the local heat pump 210. The first side 211 of the local heat pump 210 has an inlet and an outlet via which the local heat pump 210 is connected to a first circuit circulating a flow of a first fluid. The first circuit circulating a flow of a first fluid may form part of the local energy distributing grid 20a, see Fig. 2. Alternatively, the first circuit circulating a flow of a first fluid may form part of the heating circuit 230, see Fig. 3. Likewise, the second side 212 of the local heat pump 210 has an inlet and an outlet via which the local heat pump 210 is connected to a second circuit circulating a flow of a second fluid. The second circuit circulating a flow of a second fluid may form part of a hot tap water preparation system 250. The first and second circuits are different circuits. The first side 211 of the local heat pump 210 may be seen as an evaporator side of the local heat pump 210. The second side 212 of the local heat pump 210 may be seen as a condenser side of the local heat pump 210. Hence, the local heat pump 210 is configured to pump heat from the first side 211 to the second side 212, thereof. The local heat pump 210 may be configured to pump heat from the first side 211 to the second side 212, thereof, such that the hot tap water preparation system 250 is provided with a temperature of 60°C or above.

The local heat extracting assembly 200 further comprises one inlet 201. The one inlet 201 is connected to the local feed conduit 22 of the local energy distributing grid 20a. Hence, the local heat extracting assembly 200 is connected with the local energy distributing grid 20a via a single inlet 201.

The one inlet 201 may further comprise a flow controller 202. The flow controller 202 is configured to control the flow of local heat transfer fluid from the local feed conduit 22 to the local heat extracting assembly 200. The flow controller 202 is selectively set in a pumping mode or in a flowing mode. The flow controller 202 is selectively set in the pumping mode or in the flowing mode based on a local differential pressure, Δp, between the local feed conduit 22 and the local return conduit 23. In the local energy distributing grid 20a a differential pressure between local heat transfer fluid in local feed conduit 22 and the local return conduit 23 may change over time. More precisely, the differential pressure between local heat transfer fluid of the two conduits 22, 23 may change such that the differential pressure changes from positive to negative or vice versa. Depending on the variating differential pressure between the two conduits 22, 23 sometimes local heat transfer fluid of the local energy distributing grid 20a need to be pumped through the local heat extracting assembly 200 and sometimes local heat transfer fluid of the local energy distributing grid 20a need to be allowed to flow through the local heat extracting assembly 200. Δp may be measured using a pressure difference determining device 204. The pressure difference determining device 204 is configured to determine Δp between heat transfer fluid of the two conduits 22, 23. Δp is preferably measured in the vicinity to where the one inlet 201 is connected to the local feed conduit 22. Upon set in the pumping mode the flow controller 202 is configured to act as a pump 202a for pumping local heat transfer liquid from the local feed conduit 22 into the local heat extracting assembly 200. Hence, upon the flow controller 202 being set in the pumping mode, local heat transfer fluid from the local feed conduit 22 is pumped into the local heat extracting assembly 200. Upon set in flowing mode the flow controller 202 is configured to act as a flow regulator 202b for allowing local heat transfer fluid from the local feed conduit 22 to flow into the local heat extracting assembly 200. The flow regulator 202b may be seen as a valve. Hence, upon the flow controller 202 being set in the flowing mode, local heat transfer fluid from the local feed conduit 22 is allowed to flow into the local heat extracting assembly 200. Again, the choice of allowing local heat transfer fluid from the local feed conduit 22 to flow into the local heat extracting assembly 200 or pumping heat transfer liquid from the local feed conduit 22 into the local heat extracting assembly 200, is made based on the differential pressure, Δp. Embodiments of a flow controller 202 may e.g. be found in PCT/EP2017/083077 by the same applicant.

The local heat extracting assembly 200 may further comprise one outlet 205. The one outlet 205 is connected to the local return conduit 23 of the local energy distributing grid 20a. Hence, the local heat extracting assembly 200 is connected with the local energy distributing grid 20a via a single outlet 205.

Since the flow of local heat transfer fluid in the local feed conduit 22 is having a temperature of 25-45°C the input temperature to the local heat extracting assembly 200 is in the same temperature range. The local heat extracting assembly 200 is configured to extract heat from local heat transfer fluid entering the local heat extracting assembly 200 via the one inlet 201 and return local heat transfer fluid to the local return conduit 23 via the one outlet 205. The local heat extracting assembly 200 is configured to return local heat transfer fluid having a temperature being in the range of 10-35°C.

With reference to Fig. 2 specific features of the embodiment of Fig. 2 will be discussed in more detail.

The local heat extracting assembly 200 may further comprise an inlet valve assembly 203a. The inlet valve assembly 203a is configured to selectively direct a flow of local heat transfer fluid from the local feed conduit 22 to either the local heat exchanger 220 or the heat pump 210. Alternatively, the inlet valve assembly 203a is configured to simultaneously direct a flow of local heat transfer fluid from the local feed conduit 22 to both the local heat exchanger 220 and to the heat pump 210. The flow controller 202 may be connected in between the local feed conduit 22 and the inlet valve assembly 203a.

The local heat extracting assembly 200 may further comprise an outlet valve assembly 203b. The outlet valve assembly 203b is configured to selectively direct a flow of local heat transfer fluid of the local energy distributing grid 20a coming from the inlet valve assembly 203a and/or from the outlet of the first side 221 of the local heat exchanger 220 to either the inlet of the first side 211 of the local heat pump 210 or the local return conduit 23. Alternatively, the outlet valve assembly 203b is configured to simultaneously direct the flow of local heat transfer fluid of the local energy distributing grid 20a coming from the inlet valve assembly 203a and/or from the outlet of the first side 221 of the local heat exchanger 220 to both the inlet of the first side 211 of the local heat pump 210 and the local return conduit 23.

The local heat extracting assembly 200 may further comprise a local heat exchanger circulation pump 223. The local heat exchanger circulation pump 223 is configured to pump local heat transfer fluid at the first side 221 of the local heat exchanger 220. The local heat exchanger circulation pump 223 may be located as in the in Fig. 2 illustrated example at the inlet of the first side 221 of the local heat exchanger 220. Alternatively, the local heat exchanger circulation pump 223 may be located at the outlet of the first side 221 of the local heat exchanger 220.

The local heat extracting assembly 200 may further comprise a local heat pump circulation pump 213. The local heat pump circulation pump 213 is configured to pump local heat transfer fluid at the first side 211 of the local heat pump 210. The local heat pump circulation pump 213 may be located as in the in Fig. 2 illustrated example at the inlet of the first side 211 of the local heat pump 210. Alternatively, the local heat pump circulation pump 213 may be located at the outlet of the first side 211 of the local heat pump 210.

With reference to Fig. 3 specific features of the embodiment of Fig. 3 will be discussed in more detail.

The inlet of the first side 221 of the local heat exchanger 220 may form the one inlet 201 of a respective local heat extracting assembly 200. Further, the outlet of the first side 221 may form the one outlet 205 of the respective local heat extracting assembly 200.

The inlet of the first side 211 the local heat pump 210 may be connected to the feed 231 of the heating circuit 230. The outlet of the first side 211 of the local heat pump 210 may be connected to the return 232 of the heating circuit 230. Especially, the outlet of the first side 211 of the local heat pump 210 may be connected to the return 232 of the heating circuit 230 at a connection point 234. As mentioned above, the heating circuit circulation pump 233 may be arranged in the return 232 of the heating circuit 230. The heating circuit circulation pump 233 may be arranged between the connection point 234, at which the outlet of the first side 211 of the local heat pump 210 is connected to the return 232 of the heating circuit 230, and the inlet of the second side 222 of the heat exchanger 220. By such an arrangement of the heating circuit circulation pump 233, the heating circuit circulation pump 233 may be used both to circulate the heating liquid of the heating circuit 230 and the heating liquid at the first side 211 of the heat pump 210.

The local heat extracting assembly 200 may further comprise a heating circuit valve assembly 235. The heating circuit valve assembly 235 is configured to selectively direct a flow of heating liquid of the heating circuit 230 coming from the outlet of the second side 222 of the local heat exchanger 220 to either the inlet of the first side 211 of the local heat pump 210 or the one or more heat emitters 240. Alternatively, heating circuit valve assembly 235 is configured to simultaneously direct the flow of heating liquid of the heating circuit 230 coming from the outlet of the second side 222 of the local heat exchanger 220 to both the inlet of the first side 211 of the local heat pump 210 and one or more heat emitters 240.

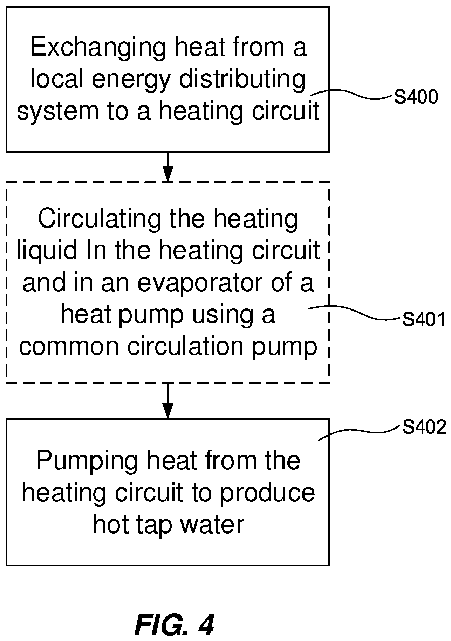

With reference to Fig. 4 a method for extracting heat from the local energy distributing system 20 will be discussed. The method comprises one or more of the following acts. The acts may be performed in any order suitable.

Exchanging S400 heat from the local energy distributing system 20 to a heating circuit 230 configured to circulate a heating liquid in a building 40. The heat circulated in the building may be used for heating the building. For example, heat may be extracted out from the heating circuit at heat emitters 240. The act S400 of exchanging heat may be performed by the local heat exchanger 220. In the act S400 of exchanging heat, heat may be extracted from a flow of local heat transfer fluid having a temperature of 25-45°C. The local heat transfer fluid being the local heat transfer fluid of the local energy distributing grid 20a.

Pumping S402 heat from the heating circuit 230 to produce hot tap water. The hot tap water may be provided to a building 40. The act S402 of pumping heat may be performed by the local heat pump 210. In the act S402 of pumping heat, heat may be pumped from a flow of heating liquid of the heating circuit 230 having a temperature of 25-45°C to a temperature equal to or greater than 60°C.

The method may further comprise circulating S401 the heating liquid in the heating circuit 230 and at the first side 211 of the heat pump 210 using a common circulation pump. The common circulation pump may be the heating circuit circulation pump 233. The first side 211 of the heat pump 210 may be seen as an evaporator side of the heat pump 210. Hence, the heating liquid is circulated at an evaporator of the heat pump 210.

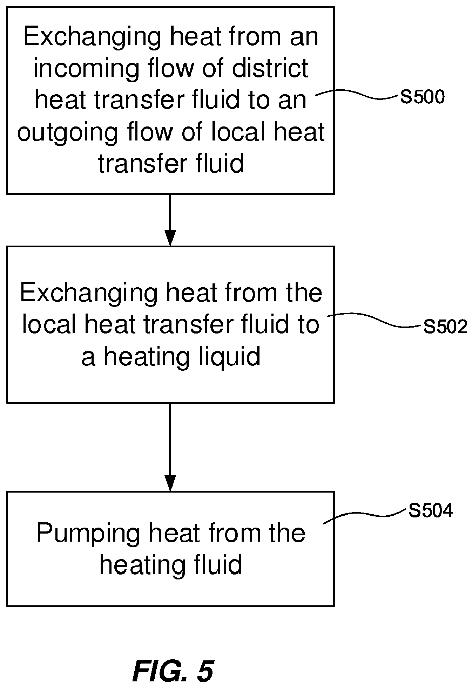

With reference to Fig. 5 a method for distributing energy to a plurality of buildings 40 will be discussed. The method comprises one or more of the following acts. The acts may be performed in any order suitable.

Exchanging S500 heat from an incoming flow of district heat transfer fluid of the district feed conduit 11 in the district heating grid 10 to an outgoing flow of local heat transfer fluid in the local feed conduit 22 of the local energy distributing system 20. The act S500 of exchanging heat may be performed by the central heat exchanger 21. The incoming flow of district heat transfer fluid may have a first temperature in the range of 50-200°C, preferably 80-120°C. The act S500 of exchanging heat may be performed such that the outgoing flow of local heat transfer fluid in the local feed conduit 22 of the local energy distributing system 20 may have a temperature of 25-45°C.

Extracting, at a local heat extracting assembly 200 in each of the plurality of buildings 40, heat from the local heat transfer fluid for providing comfort heating and hot tap water to the respective building 40. As mentioned above, each local heat extracting assembly 200 having one inlet 201 connected to the local feed conduit 22. The act of extracting heat from the local heat transfer fluid for providing comfort heating and hot tap water to the respective building 40 comprises: exchanging S502 heat from the local heat transfer fluid to the heat transfer fluid of the heating circuit 230, and pumping S504 heat from the heating fluid. In the act of exchanging S502 heat from the local heat transfer fluid to the heat transfer fluid heat is exchanged from the local energy distributing system to the heating circuit 230. The heating circuit 230 is configured to circulate the heating liquid in the respective building 40 for providing comfort heating to the building 40. The act S502 of exchanging heat may be performed by the local heat exchanger 220. In the act S504 of pumping heat from the heating fluid of the heating circuit 230 the pumped heat is used to produce hot tap water. The act S504 of pumping heat may be performed by the local heat pump 210.

The person skilled in the art realizes that the present invention by no means is limited to the preferred embodiments described above. On the contrary, many modifications and variations are possible within the scope of the appended claims.

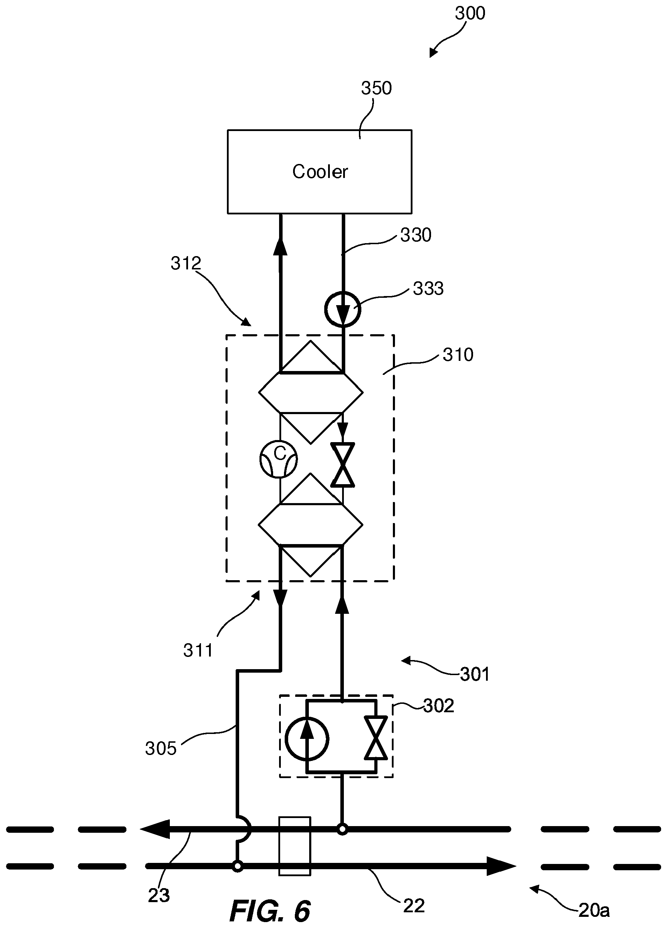

For example, the local energy distributing system 20 may further comprise one or more local cold extracting assemblies 300, see Fig. 1. In connection with Fig. 6, a local cold extracting assembly 300 will be discussed. The local cold extracting assembly 300 comprises a cooling machine 310. The cooling machine 310 is working in the same manner as a heat pump but instead heat is pumped out from the building 40. Hence, the local cold extracting assembly 300 is configured to extract heat from a building 40. The cooling machine 310 is configured to provide cooling to the building 40. Cooling machines as such, are well known in the art and basically comprise a closed circuit in which brine is circulated between first heat exchanger at a first side 311 of the cooling machine 310 and a second heat exchanger at a second side 312 of the cooling machine 310. The first side 311 of the cooling machine 310 has an inlet and an outlet via which the cooling machine 310 is connected to a first circuit circulating a flow of a first fluid. The first circuit circulating a flow of a first fluid form part of the local energy distributing grid 20a. Likewise, the second side 312 of the cooling machine 310 has an inlet and an outlet via which the cooling machine 310 is connected to a second circuit circulating a flow of a second fluid. The second circuit circulating a flow of a second fluid form part of a cooling circuit 330. The first and second circuits are different circuits. The first side 311 of the cooling machine 310 may be seen as a condenser side of the cooling machine 310. The second side 312 of the cooling machine 310 may be seen as an evaporator side of the cooling machine 310. Hence, the cooling machine 310 is configured to pump heat from the second side 312 to the first side 211, thereof.

The cooling circuit 330 is forming part of the local cold extracting assembly 300. The cooling circuit 330 is configured to circulate a cooling liquid in a building 40 in order to provide comfort cooling to the building 40. The cooling liquid of the cooling circuit 330 is typically water, although it is to be understood that other liquids or mixture of liquids may be used. Some non-limiting examples are ammonia, anti-freezing liquids (such as glycol), oils and alcohols. A non-limiting example of a mixture is water with an anti-freezing agent, such as glycol, added thereto. The cooling circuit 330 may form part of a refrigerator or freezer. Alternatively, or in combination, the cooling circuit 330 may further comprise one or more coolers 350. Coolers 350 are as such well known in the art and may be used e.g. for comfort cooling in buildings such as office buildings, business premises, residential homes and factories in need for cooling. The cooling liquid of the cooling circuit 330 may be circulated using a cooling circuit circulation pump 333.

Further, each local cold extracting assemblies 300 may comprise one inlet 301. The one inlet 301 is connected to the local return conduit 23 of the local energy distributing grid 20a. Hence, the local cold extracting assemblies 300 is connected with the local energy distributing grid 20a via a single inlet 301. The one inlet 301 may further comprise a flow controller 302. The flow controller 302 is having the same functionality as the flow controller 202 of the one inlet 201 of the local heat extracting assembly 200 discussed above. In order to avoid undue repetition, reference is made to the discussion about the flow controller 202 above.

The local cold extracting assemblies 300 may further comprise one outlet 305. The one outlet 305 is connected to the local feed conduit 22 of the local energy distributing grid 20a. Hence, the local cold extracting assemblies 300 is connected with the local energy distributing grid 20a via a single outlet 305.

Since the flow of local heat transfer fluid in the local return conduit 23 is having a temperature of 10-35°C the input temperature to the local cold extracting assembly 300 is in the same temperature range. The local cold extracting assembly 300 is configured to extract cold from local heat transfer fluid entering the local cold extracting assembly 300 via the one inlet 301 and return local heat transfer fluid to the local feed conduit 22 via the one outlet 305. The local cold extracting assembly 300 is configured to return local heat transfer fluid having a temperature being in the range of 25-45°C.

Additionally, variations to the disclosed embodiments can be understood and effected by the skilled person in practicing the claimed invention, from a study of the drawings, the disclosure, and the appended claims.

## Claims

1. A local energy distributing system comprising:
a local feed conduit (22);
a local return conduit (23);
a central heat exchanger (21) connectable to a district heating grid (10) having a district feed conduit (11) for an incoming flow of district heat transfer fluid having a first temperature in the range of 50-200°C, preferably 80-120°C, and a district return conduit (12) for a return flow of district heat transfer fluid, wherein the central heat exchanger (21) is configured to exchange heat from the incoming flow of district heat transfer fluid to an outgoing flow of local heat transfer fluid in the local feed conduit (22), the outgoing flow of local heat transfer fluid having a temperature of 25-45°C; and
a plurality of local heat extracting assembly (200), each having one inlet (201) connected to the local feed conduit (22) and one outlet (205) connected to the local return conduit (23), wherein each local heat extracting assembly (200) comprises:
a local heat exchanger (220) configured to extract heat from local heat transfer fluid of the local feed conduit (22) to a heating liquid of a heating circuit (230) configured to circulate the heating liquid in a building (40) for providing comfort heating; and
a heat pump (210) configured to pump heat from the heating liquid of the heating circuit (230) or from local heat transfer fluid of the local feed conduit (22) to provide hot tap water to the building (40).

2. The local energy distributing system according to claim 1,
wherein the local heat exchanger (220) comprises a first side (221) and a second side (222),
wherein an inlet of the first side (221) of the local heat exchanger (220) forms the one inlet (201) of a respective local heat extracting assembly (200) and an outlet of the first side (221) of the local heat exchanger (220) forms the one outlet (205) of the respective local heat extracting assembly (200),
wherein an outlet of the second side (222) of the local heat exchanger (220) is connected to a feed (231) of the heating circuit (230) and to an inlet of a first side (211) the local heat pump (210), and
wherein an inlet of the second side (222) of the local heat exchanger (220) is connected to a return (232) of the heating circuit (230) and to an outlet of the first side (211) of the local heat pump (210).

3. The local energy distributing system according to claim 2, wherein the outlet of the first side (211) of the local heat pump (210) is connected to the inlet of the second side (222) of the heat exchanger (220) by being connected to the return (232) of the heating circuit (230) at a connection point (234).

4. The local energy distributing system according to claim 3, wherein a heating circuit circulation pump (233) is arranged in the return (232) of the heating circuit (230) and between the connection point (234) and the inlet of the second side (222) of the heat exchanger (220).

5. The local energy distributing system according to any one of claims 1-4, further comprising one or more local cold extracting assemblies (300), wherein each local cold extracting assembly (300) comprises a cooling machine (310) configured to pump heat from a cooling circuit (330), configured to circulate a cooling liquid in the building (40), to the local energy distributing system.

6. A local heat extracting assembly (200) having one inlet (201) connectable to a local feed conduit (22) of a local energy distributing system (20), and one outlet (205) connectable to a local return conduit (23) of the local energy distributing system (20), wherein the local heat extracting assembly (200) comprises:
a local heat exchanger (220) configured to extract heat from local heat transfer fluid of the local feed conduit (22) to a heating liquid of a heating circuit (230) configured to circulate the heating liquid in a building (40) for providing comfort heating; and
a heat pump (210) configured to pump heat from the heating liquid of the heating circuit (230) or from local heat transfer fluid of the local feed conduit (22) to provide hot tap water to the building (40).

7. The local heat extracting assembly according to claim 6, wherein the local heat exchanger (220) comprises a first side (221) and a second side (222),
wherein an inlet of the first side (221) of the local heat exchanger (220) forms the one inlet (201) of the local heat extracting assembly and an outlet of the first side (221) of the local heat exchanger (220) forms the one outlet (205) of the local heat extracting assembly,
wherein an outlet of the second side (222) of the local heat exchanger (220) is connected to a feed (231) of the heating circuit (230) and to an inlet of a first side (211) the local heat pump (210), and
wherein an inlet of the second side (222) of local heat exchanger (220) is connected to a return (232) of the heating circuit (230) and to an outlet of the first side (211) the local heat pump (210).

8. The local heat extracting assembly according to claim 7, wherein the outlet of the first side (211) of the local heat pump (210) is connected to the inlet of the second side (222) of the heat exchanger (220) by being connected to the return (232) of the heating circuit (230) at a connection point (234).

9. The local heat extracting assembly according to claim 8, wherein a heating circuit circulation pump (233) is arranged in the return (232) of the heating circuit (230) and between the connection point (234) and the inlet of the second side (222) of the heat exchanger (220).

10. A method for extracting heat from a local energy distributing system (20), the method comprising:
exchanging, at a local heat exchanger (220), heat from local heat transfer fluid of the local energy distributing system (20) to heating liquid of a heating circuit (230) configured to circulate the heating liquid in a building (40); and
pumping, at a local heat pump (210), heat from heating liquid of the heating circuit (230) to produce hot tap water to the building (40).

11. The method according to claim 10, wherein in the act of exchanging heat, heat is extracted from a flow of local heat transfer fluid having a temperature of 25-45°C.

12. The method according to claim 10 or 11, wherein in the act of pumping heat, heat is pumped from a flow of heating liquid having a temperature of 25-45°C to a temperature equal to or greater than 60°C.

13. The method according to any one of claims 10-12, further comprising circulating the heating liquid in the heating circuit (230) and in an evaporator of the heat pump (210) using a common circulation pump (233).

14. A method for distributing energy to a plurality of buildings (40), the method comprising:
exchanging, at a central heat exchanger (21), heat from an incoming flow of district heat transfer fluid of a district feed conduit (11) in a district heating grid (10), the incoming flow of district heat transfer fluid having a first temperature in the range of 50-200°C, preferably 80-120°C, to an outgoing flow of local heat transfer fluid in a local feed conduit (22) of a local energy distributing system (20), the outgoing flow of local heat transfer fluid having a temperature of 25-45°C; and
extracting, at a local heat extracting assembly (200) in each of the plurality of buildings (40), each local heat extracting assembly (200) having one inlet (201) connected to the local feed conduit (22), heat from the local heat transfer fluid flowing in the local feed conduit (22) for providing comfort heating and hot tap water to the respective building (40),
wherein the act of extracting heat from the local heat transfer fluid flowing in the local feed conduit (22) for providing comfort heating and hot tap water to the respective building (40) comprises:
exchanging, at a local heat exchanger (220), heat from local heart transfer fluid of the local energy distributing system to heating liquid of a heating circuit (230) configured to circulate the heating liquid in the respective building (40) for providing comfort heating to the building (40); and
pumping, at a local heat pump (210), heat from heating liquid of the heating circuit (230) to produce hot tap water to the building (40).
